# EUROPÄISCHE PATENTSCHRIFT

(11) **EP 2 499 593 B1**
(45) Veröffentlichungstag und Bekanntmachung des Hinweises auf die Patenterteilung: **31.12.2014**
(21) Anmeldenummer: 10768224.7
(22) Anmeldetag: 06.10.2010
(51) Int. Cl.: G06F 21/00, G06F 9/445

(54) **VERFAHREN UND SYSTEM ZUM AUFLÖSEN EINES NAMENSKONFLIKTES**
METHOD AND SYSTEM FOR RESOLVING A NAMING CONFLICT
PROCÉDÉ ET SYSTÈME PERMETTANT DE RÉSOUDRE UN CONFLIT DE NOM

(30) Priorität: 09.11.2009 DE 102009052457
(43) Veröffentlichungstag der Anmeldung: 19.09.2012
(73) Patentinhaber: Siemens Aktiengesellschaft, 80333 München (DE)
(72) Erfinder: BRAUN, Michael, 80999 München (DE); DICHTL, Markus, 80636 München (DE); MEYER, Bernd, 81739 München (DE)
(86) Internationale Anmeldenummer: PCT/EP2010/064946
(87) Internationale Veröffentlichungsnummer: WO 2011/054617

(56) Entgegenhaltungen:
- WO-A2-02/31648
- CHRIS LÜER ET AL: "JPloy: User-Centric Deployment Support in a Component Platform", 1. Mai 2004 (2004-05-01), COMPONENT DEPLOYMENT; [LECTURE NOTES IN COMPUTER SCIENCE;;LNCS], SPRINGER-VERLAG, BERLIN/HEIDELBERG, PAGE(S) 190 - 204, XP019006698, ISBN: 978-3-540-22059-6 * Zusammenfassung Section 2 Section 4 Section 5
- "Recipe 2.4. Preventing Name Collisions with Namespaces" In: D. Ryan Stephens; Christopher Diggins; Jonathan Turkanis; Jeff Cogswell: "C++ Cookbook", [Online] 8. November 2005 (2005-11-08), O'Reilly Media, Inc., XP007916256, ISBN: 978-0-596-00761-4 Gefunden im Internet: URL:http://proquest.safaribooksonline.com/ print?xmlid=0596007612/cplusp> [gefunden am 2010-12-08] Example 2-5
- "3.27 Generating Unique Table Names" In: Paul DuBois: "MySQL Cookbook", [Online] 28. Oktober 2002 (2002-10-28), O'Reilly Media, Inc., XP007916255, ISBN: 978-0-596-00145-2 Gefunden im Internet: URL:http://proquest.safaribooksonline.com/ print?xmlid=0-596-00145-2/mys> [gefunden am 2010-12-08] Section 3.27
- PETR HNÌTYNKA AND PETR TÙMA: "Fighting Class Name Clashes in Java Component Systems", LECTURE NOTES IN COMPUTER SCIENCE, SPRINGER, DE, Bd. 2789, 1. Januar 2003 (2003-01-01), Seiten 106-109, XP007916250, ISSN: 0302-9743

## Beschreibung

Die Erfindung betrifft ein Verfahren zum Auflösen eines Namenskonfliktes bei verschlüsselten Softwarekomponenten und ein System zur namenskonfliktfreien Integration von Softwarekomponenten, die von verschiedenen Softwarekomponentenherstellern OEM (Original Equipment Manufacturer) stammen können.

Bei der Verwendung verschlüsselter Software bzw. Softwarekomponenten können Namenskonflikte auftreten. Da die entsprechenden Softwarekomponenten nur verschlüsselt vorliegen, sind derartige Namenskonflikte bei herkömmlichen Systemen nicht ohne weiteres auflösbar. Wird beispielsweise eine Softwarekomponente oder ein Softwarepaket von verschiedenen Softwarekomponentenherstellern OEM generiert bzw. erzeugt und anschließend verschlüsselt, ist eine Behebung eines Namenskonfliktes bei der späteren Integration der Softwarekomponenten nicht behebbar. Wenn beispielsweise beide Softwarepakete bestimmte Funktionen unter demselben Funktionsnamen aufrufen, der allerdings bei beiden Softwarekomponenten unterschiedliche Unterprogramme bzw. Subroutine benennt, liegt ein Namenskonflikt vor. Da dem Anwender der beiden Softwarepakete bzw. Softwarekomponenten der Sourcecode nicht in unverschlüsselter Form vorliegt, kann er den Namenskonflikt nicht auflösen.

Die Druckschrift Lüer, C. et al.: "JPloy: User-Centric Deployment Support in a Component Platform", Component Deployment, Springer Verlag, Berlin/Heidelberg, S. 190- 204 offenbart ein Integrationswerkzeug zur Integration eingesetzter Softwarekomponenten bei der Inbetriebnahme eines aus vielen Softwarekomponenten bestehenden Softwareprodukts. Dabei wird im Rahmen einer Softwareintegration bei einem Erkennen eines Versionskonflikts ein Zugriff auf unterschiedliche Versionen einer Softwarekomponente ausgeführt, um den Konflikt zu beheben.

Es ist daher eine Aufgabe der Erfindung, ein Verfahren und ein System zum Auflösen eines Namenskonfliktes bei verschlüsselten Softwarekomponenten zu schaffen.

Diese Aufgabe wird erfindungsgemäß durch ein Verfahren mit den in Patentanspruch 1 angegebenen Merkmalen gelöst.

Die Erfindung schafft ein Verfahren zum Auflösen eines Namenskonfliktes bei verschlüsselten Softwarekomponenten mit den Schritten:
(a) Erkennen eines Namenskonfliktes bei den verschlüsselten Softwarekomponenten (ENC-SWK);
(b) Erweitern einer der verschlüsselten Softwarekomponenten (ENC-SWK), bei denen ein Namenskonflikt erkannt wird, mit einer Namenskonfliktauflösungsregel zur Auflösung des Namenskonfliktes;
(c) Auflösen des Namenskonfliktes nach Übertragung der verschlüsselten Softwarekomponenten zu einer Zielsystemvorrichtung und nach deren Entschlüsselung auf der Zielsystemvorrichtung entsprechend der mitübertragenen Namenskonfliktauflösungsregel.

Bei einer Ausführungsform des erfindungsgemäßen Verfahrens wird ein Namenskonflikt zwischen zwei verschlüsselten Softwarekomponenten erkannt, wenn die Softwarekomponente mindestens einen identischen Namen für Funktionsaufrufe, Konstanten, Variablen, Datentypen oder andere Datenobjekte von unterschiedlichen Funktionen, Konstanten, Variablen, Datentypen oder anderen Objekten aufweisen.

Bei einer möglichen Ausführungsform des erfindungsgemäßen Verfahrens wird ein Namenskonflikt zwischen verschlüsselten Softwarekomponenten anhand unverschlüsselter Kopfdaten der jeweilig verschlüsselten Softwarekomponenten erkannt.

Bei einer alternativen Ausführungsform des erfindungsgemäßen Verfahrens wird ein Namenskonflikt zwischen verschlüsselten Softwarekomponenten anhand von Tabellen der in den verschlüsselten Softwarekomponenten verwendeten Namen für Softwarekomponentenaufrufe, Konstanten, Variablen, Datentypen oder Objekte erkannt.

Bei einer möglichen Ausführungsform des erfindungsgemäßen Verfahrens wird zur Auflösung eines Namenskonfliktes zwischen zwei verschlüsselten Softwarekomponenten derjenige Name, welcher den Namenskonflikt hervorruft, in einer der beiden Softwarekomponenten nach deren Entschlüsselung für alle in der Softwarekomponente enthaltenen Funktionsaufrufe und Zugriffe, welche diesen Namen verwenden, durch einen Ersatznamen ersetzt.

Bei einer möglichen Ausführungsform des erfindungsgemäßen Verfahrens ist der Ersatzname in der mitübertragenen Namenskonfliktauflösungsregel enthalten.

Bei einer alternativen Ausführungsform wird der Ersatzname in der Zielsystemvorrichtung generiert.

Bei einer möglichen Ausführungsform des erfindungsgemäßen Verfahrens wird der Ersatzname durch eine generierte Zufallszahl oder durch einen Zählwert gebildet.

Bei einer möglichen Ausführungsform des erfindungsgemäßen Verfahrens umfasst ein Name für einen Funktionsaufruf, eine Konstante, eine Variable, einen Datentyp oder ein anderes Objekt einer anderen Softwarekomponente eine Folge von Zeichen, Buchstaben und Zahlen.

Bei einer möglichen Ausführungsform des erfindungsgemäßen Verfahrens wird eine entwickelte Softwarekomponente unter Verwendung eines hybriden Verschlüsselungsverfahrens mit einem öffentlichen Schlüssel verschlüsselt.

Bei einer möglichen Ausführungsform des erfindungsgemäßen Verfahrens wird die verschlüsselte Softwarekomponente unter Verwendung eines hybriden Verschlüsselungsverfahrens mit einem privaten Schlüssel entschlüsselt, der in der Zielsystemvorrichtung integriert ist.

Bei einer Ausführungsform des erfindungsgemäßen Verfahrens werden der öffentliche Schlüssel und der private Schlüssel als Schlüsselpaar durch einen Hersteller der Zielsystemvorrichtung generiert.

Bei einer möglichen Ausführungsform des erfindungsgemäßen Verfahrens wird die Zielsystemvorrichtung durch eine speicherprogrammierbare Steuerung gebildet.

Bei einer möglichen Ausführungsform des erfindungsgemäßen Verfahrens wird das Erkennen eines Namenskonfliktes, die Erweiterung einer verschlüsselten Softwarekomponente um eine Namenskonfliktauflösungsregel sowie das Auflösen des Namenskonfliktes automatisch durchgeführt.

Die Erfindung schafft ferner ein System zur namenskonfliktfreien Integration von Softwarekomponenten, die von verschiedenen Softwarekomponentenherstellern stammen, mit:
Softwareentwicklungseinrichtungen unterschiedlicher Softwarekomponentenhersteller, die Softwarekomponenten herstellen und mit ihrem jeweiligen kryptographischen Schlüssel verschlüsseln,
wobei bei Auftreten eines Namenskonfliktes bei der Integration von verschlüsselten Softwarekomponenten mindestens eine der verschlüsselten Softwarekomponenten, bei welcher der Namenskonflikt aufgetreten ist, mit einer Namenskonfliktauflösungsregel erweitert wird, und mit
einem Transportmittel zum Transport der verschlüsselten Softwarekomponenten einschließlich der durch die Namenskonfliktauflösungsregel erweiterten verschlüsselten Softwarekomponente zu einer Zielsystemvorrichtung, welche nach Empfang der transportierten verschlüsselten Softwarekomponente diese zunächst entschlüsselt und anschließend entsprechend der mittransportierten Namenskonfliktauflösungsregel den aufgetretenen Namenskonflikt automatisch auflöst.

Bei einer möglichen Ausführungsform des erfindungsgemäßen Systems weist das Transportmittel ein Datennetz auf.
Bei einer alternativen Ausführungsform des erfindungsgemäßen Systems wird das Transportmittel durch einen Datenträger bzw. einen Speicher gebildet.

Die Erfindung schafft ferner eine Zielsystemvorrichtung zur Auflösung von Namenskonflikten bei Softwarekomponenten mit einer Schnittstelle zum Empfangen von verschlüsselten Softwarekomponenten, wobei, wenn mindestens eine empfangene verschlüsselte Softwarekomponente mit einer Namenskonfliktauflösungsregel erweitert ist, die Zielsystemvorrichtung nach Entschlüsseln der verschlüsselten Softwarekomponenten den aufgetretenen Namenskonflikt anhand der empfangenen Namenskonfliktauflösungsregel automatisch auflöst.

Im Weiteren werden Ausführungsformen des erfindungsgemäßen Verfahrens und des erfindungsgemäßen Systems unter Bezugnahme auf die beigefügten Figuren erläutert.

Es zeigen:
- Fig. 1: ein Ablaufdiagramm zur Darstellung einer möglichen Ausführungsform des erfindungsgemäßen Verfahrens zum Auflösen eines Namenskonfliktes bei verschlüsselten Softwarekomponenten;
- Fig. 2: ein Blockschaltbild zur Darstellung einer möglichen Ausführungsform des erfindungsgemäßen Systems zur namenskonfliktfreien Integration von Softwarekomponenten.

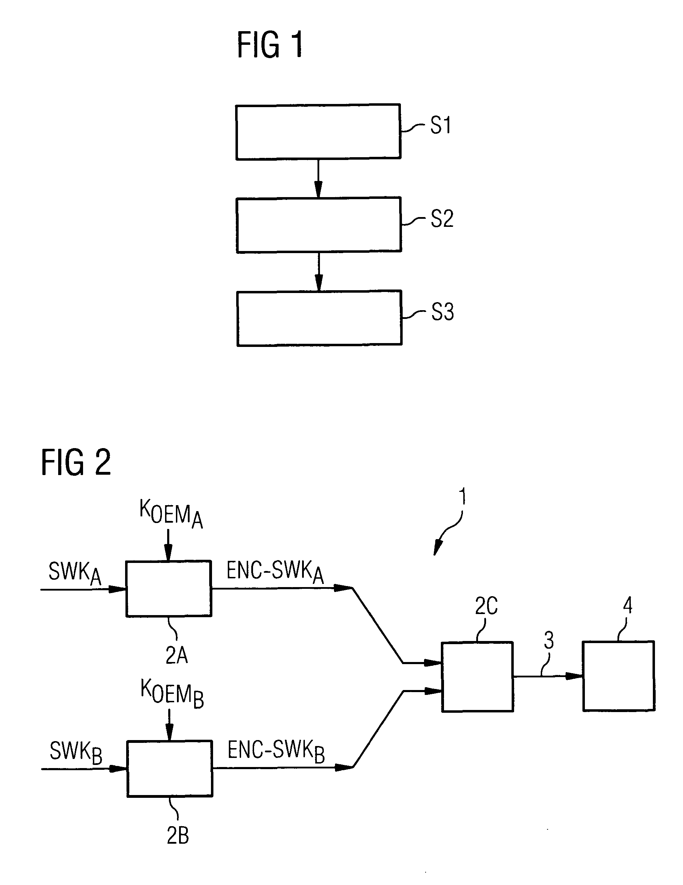

Wie man aus Fig. 1 erkennen kann, weist das erfindungsgemäße Verfahren zum Auflösen eines Namenskonfliktes bei verschlüsselten Softwarekomponenten im Wesentlichen drei Schritte S1, S2, S3 auf.

In einem ersten Schritt S1 wird zunächst ein Auftreten eines Namenskonfliktes bei verschlüsselten Softwarekomponenten, die von den gleichen aber auch verschiedenen Softwarekomponentenherstellern OEM stammen können, erkannt bzw. detektiert. Dabei wird ein Namenskonflikt zwischen verschlüsselten Softwarekomponenten insbesondere dann erkannt, wenn die Softwarekomponenten mindestens einen identischen Namen für Funktionsaufrufe, Konstanten, Variablen Datentypen oder andere Objekte von unterschiedlichen Funktionen, Konstanten, Variablen, Datentypen oder anderen Objekten aufweisen. Weisen beispielsweise zwei Softwarekomponenten einen identischen Namen bei einem Funktionsaufruf für unterschiedliche Funktionen auf, besteht ein Namenskonflikt, der im Schritt S1 erkannt wird. Dies kann bei einer möglichen Ausführungsvariante anhand unverschlüsselter Kopfdaten der jeweiligen verschlüsselten Softwarekomponenten erkannt werden. Bei einer alternativen Ausführungsform wird der Namenskonflikt zwischen verschlüsselten Softwarekomponenten anhand von Tabellen der in den verschlüsselten Softwarekomponenten verwendeten Namen für Softwarekomponentenaufrufe, Konstanten, Variablen, Datentypen oder Objekte erkannt.

Sobald ein Namenskonflikt in Schritt S1 erkannt wird, erfolgt in einem Schritt S2 eine Erweiterung einer der verschlüsselten Softwarekomponenten, bei denen ein Namenskonflikt erkannt wird mit einer Namenskonfliktauflösungsregel zur Auflösung des Namenskonflikts.

Abschließend werden die verschlüsselten Softwarekomponenten in einem Schritt S3 zu einer Zielsystemvorrichtung übertragen. Erst nach der Übertragung erfolgt ein Auflösen des Namenskonfliktes nach der Entschlüsselung der Softwarekomponenten auf der Zielsystemvorrichtung entsprechend der mitübertragenen für die Zielsystemvorrichtung im Klartext lesbaren Namenskonfliktauflösungsregel.

Die Auflösung des Namenskonfliktes geschieht somit ohne dass der Quellcode des Softwarekomponentenherstellers OEM für Dritte sichtbar ist.
Zur Auflösung eines Namenskonfliktes zwischen zwei verschlüsselten Softwarekomponenten wird derjenige Name, welcher den Namenskonflikt hervorruft, in mindestens einer der beiden Softwarekomponenten nach deren Entschlüsselung für alle in der Softwarekomponente enthaltenen Funktionsaufrufe und Zugriffe, welche diesen Namen verwenden, durch einen Ersatznamen ersetzt.

Bei einer möglichen Ausführungsform des erfindungsgemäßen Verfahrens ist dabei der Ersatzname in der mitübertragenen Namenskonfliktauflösungsregel enthalten. Die Namenskonfliktauflösungsregel lautet dann beispielsweise: Ersetze "Funktionsname" von Softwarekomponente X durch "Ersatzname".

Alternativ kann der Ersatzname auch durch die Zielsystemvorrichtung generiert werden. Bei dem Ersatznamen kann es sich um eine generierte Zufallszahl oder einen durch einen Zähler gebildeten Zählwert handeln.

Bei dem Namen, welcher für einen Funktionsaufruf, eine Konstante, eine Variable, einen Datentyp oder ein anderes Objekt bzw. Datenobjekt verwendet wird, kann es sich um eine Folge von Zeichen handeln, die Buchstaben und Zahlen umfasst.

Bei einer möglichen Ausführungsform des erfindungsgemäßen Verfahrens wird die durch einen Softwarekomponentenhersteller OEM entwickelte Softwarekomponente SWK unter Verwendung eines hybriden Verschlüsselungsverfahrens mit einem öffentlichen Schlüssel K_{pub} verschlüsselt. Nach Übertragung von einer Sendeeinrichtung zu einer Empfangseinrichtung wird empfangsseitig die verschlüsselte Softwarekomponente ENC-SWK unter Verwendung eines hybriden Verschlüsselungsverfahrens mit einem privaten Schlüssel Kₚᵣᵢᵥ entschlüsselt, der in der Zielsystemvorrichtung integriert sein kann. Dabei wird der private Schlüssel Kₚᵣᵢᵥ vorzugsweise manipulationssicher in der Zielsystemvorrichtung hinterlegt.
Bei einer möglichen Ausführungsform des erfindungsgemäßen Verfahrens wird der öffentliche Schlüssel K_{pub} und der private Schlüssel als Schlüsselpaar durch einen Hersteller der Zielsystemvorrichtung generiert, wobei es sich bei der Zielsystemvorrichtung um eine speicherprogrammierbare Steuerung SPS handeln kann.

Fig. 2 zeigt ein Blockschaltbild zur Darstellung einer möglichen Ausführungsform des erfindungsgemäßen Systems 1 zur namenskonfliktfreien Integration von Softwarekomponenten SWK, die von verschiedenen Softwarekomponentenherstellern OEM stammen können. Bei dem in Fig. 2 dargestellten Beispiel generieren zwei verschiedene Softwarekomponentenhersteller OEM_{A} und OEM_{B} zwei verschiedene Softwarekomponenten SWK_{A} und SWK_{B} beispielsweise mittels eines entsprechenden Entwicklungstools. Softwareentwicklungseinrichtungen 2A, 2B verschlüsseln die Softwarekomponenten SWK mit dem jeweiligen kryptographischen Schlüssel K_{OEM} des jeweiligen Softwarekomponentenherstellers OEM_{A}, OEM_{B}. Bei den Softwarekomponenten SWK kann es sich beispielsweise um Programme bzw. Unterprogramme handeln, aber auch um andere Softwarebausteine, beispielsweise Dateien. Die Softwarekomponenten SWK werden mit einem entsprechenden Entwicklungstool zunächst hergestellt bzw. programmiert und liegen als Source bzw. Quellcode vor. Zum Schutz der Softwarekomponenten SWK vor einem ungewollten Zugriff unberechtigter Dritter werden diese Softwarekomponenten bzw. der Quellcode mittels eines kryptographischen Schlüssels K_{OEMA} bzw. K_{OEMB}. durch eine Verschlüsselungseinheit innerhalb der Softwareentwicklungseinrichtungen 2A, 2B jeweils verschlüsselt und liegen anschließend in verschlüsselter Form vor. In dem in Fig. 2 dargestellten Ausführungsbeispiel erfolgt anschließend eine Integration der beiden verschlüsselten Softwarekomponenten ENC-SWK_{A} und ENC-SWK_{B} beispielsweise durch einen dritten Softwarekomponentenhersteller C in einer Softwareentwicklungseinrichtung 2C bzw. Softwareintegrationseinrichtung. Bei dem in Fig. 2 dargestellten Beispiel sind die beiden Softwarekomponentenhersteller OEM_{A} und OEM_{B} beispielsweise Zulieferer eines weiteren Softwarekomponentenherstellers OEM_{C}. In der Einrichtung 2C des dritten Softwarekomponentenherstellers OEM_{C} wird bei Auftreten eines Namenskonfliktes bei der Integration der beiden verschlüsselten Softwarekomponenten ENC-SWK_{A}, ENC-SWK_{B} mindestens eine der beiden verschlüsselten Softwarekomponenten, bei denen der Namenskonflikt auftritt, mit einer Namenskonfliktauflösungsregel erweitert.

Nach erfolgter Erweiterung einer der beiden verschlüsselten Softwarekomponenten, beispielsweise der verschlüsselten Softwarekomponente ENC-SWK_{B} werden beide verschlüsselten Softwarekomponenten über ein Transportmittel 3 zu einer Zielsystemvorrichtung 4 transportiert. Dabei erfolgt der Transport der verschlüsselten Softwarekomponenten einschließlich der durch die Namenskonfliktauflösungsregel erweiterten verschlüsselten Softwarekomponente. Bei dem in Fig. 2 dargestellten Ausführungsbeispiel ist das Transportmittel 3 eine Datenleitung bzw. ein Datennetz. Bei einer alternativen Ausführungsform ist das Transportmittel ein Datenträger bzw. ein Speicher. Bei der Übertragung über ein Datennetz kann die Übertragung drahtgebunden aber auch drahtlos erfolgen.

Auf Seiten der Zielsystemvorrichtung 4 werden nach Empfang der transportierten verschlüsselten Softwarekomponenten diese zunächst entschlüsselt und anschließend wird entsprechend der mittransportierten Namenskonfliktauflösungsregel der aufgetretene Namenskonflikt empfangsseitig automatisch aufgelöst. Anschließend erfolgt die Ausführung der Sofwarekomponenten. Bei der Zielsystemvorrichtung 4 kann es sich beispielsweise um eine speicherprogrammierbare Steuerung SPS handeln.

Bei dem erfindungsgemäßen Verfahren und System erhält die Zielsystemeinrichtung 4 Informationen über zu ersetzende Funktionsaufrufe zur Auflösung des Namenskonfliktes anhand einer mittransportierten Namenskonfliktauflösungsregel. Das erfindungsgemäße System erlaubt es einem Anwender, aufgerufene Funktionen verschlüsselt zugelieferter Software bzw. Softwarekomponenten flexibel umzubenennen. Dabei bleibt das Knowhow des jeweiligen Softwarekomponentenherstellers OEM trotz der bestehenden Umbenennungsmöglichkeit zur Auflösung des Namenskonfliktes vor Zugriffen Dritter geschützt, weil der Anwender auf der Zielsystemvorrichtung 4 die verschlüsselte Software nach Entschlüsselung auf seinem Zielsystem zwar ausführen kann, jedoch nicht in unverschlüsselter Form einsehen kann.

Das erfindungsgemäße Verfahren und System ist universal für jede Art von hergestellten Softwarekomponenten SWK bzw. Softwarebausteinen einsetzbar. Das erfindungsgemäße Verfahren ist auch bei mehrstufiger Integration verschiedener Softwarekomponenten verwendbar. In einer möglichen Ausführungsform ist der zur Auflösung des Namenskonfliktes verwendete Ersatzname in der mitübertragenen Namenskonfliktauflösungsregel enthalten. Bei einer alternativen Ausführungsform wird der Ersatzname in der Zielsystemvorrichtung 4 des Anwenders generiert. Dabei kann es sich um eine generierte Zufallszahl, einen generierten Zählwert oder eine generierte Folge von Buchstaben handeln. Die Wortbreite des Ersatznamens kann variieren oder vorgegeben sein. Bei einer möglichen Ausführungsform erfolgt eine Sicherheitsüberprüfung, ob der Ersatzname seinerseits einen Namenskonflikt auslöst. In diesem Falle wird ein anderer Ersatzname generiert, beispielsweise mittels eines Zufallsgenerators oder eines Zählers.

## Patentansprüche

1. Verfahren zum Auflösen eines Namenskonfliktes bei verschlüsselten Softwarekomponenten (ENC-SWK) mit den folgenden Schritten:
(a) Erkennen (S1) eines Namenskonfliktes bei den verschlüsselten Softwarekomponenten (ENC-SWK);
(b) Erweitern (S2) einer der verschlüsselten Softwarekomponenten (ENC-SWK), bei denen ein Namenskonflikt erkannt wird, mit einer Namenskonfliktauflösungsregel zur Auflösung des Namenskonfliktes;
(c) Auflösen (S3) des Namenskonfliktes nach Übertragung der verschlüsselten Softwarekomponenten (ENC-SWK) zu einer Zielsystemvorrichtung (4) und nach deren Entschlüsselung auf der Zielsystemvorrichtung (4) entsprechend der mitübertragenen Namenskonfliktauflösungsregel.

2. Verfahren nach Anspruch 1,
wobei ein Namenskonflikt zwischen verschlüsselten Softwarekomponenten (ENC-SWK) erkannt wird, wenn die Softwarekomponenten (SWK) mindestens einen identischen Namen für Funktionsaufrufe, Konstanten, Variablen, Datentypen oder andere Objekte von unterschiedlichen Funktionen, Konstanten, Variablen, Datentypen oder anderen Objekten aufweisen.

3. Verfahren nach Anspruch 1 oder 2,
wobei ein Namenskonflikt zwischen verschlüsselten Softwarekomponenten (ENC-SWK) anhand unverschlüsselter Kopfdaten der jeweiligen verschlüsselten Softwarekomponenten (ENC-SWK) erkannt wird.

4. Verfahren nach Anspruch 1 oder 2,
wobei ein Namenskonflikt zwischen verschlüsselten Softwarekomponenten (ENC-SWK) anhand von Tabellen der in den verschlüsselten Softwarekomponenten (ENC-SWK) verwendeten Namen für Softwarekomponentenaufrufe, Konstanten, Variablen, Datentypen oder Objekte erkannt wird.

5. Verfahren nach Anspruch 1-4,
wobei zur Auflösung eines Namenskonfliktes zwischen zwei verschlüsselten Softwarekomponenten (ENC-SWK) derjenige Name, welcher den Namenskonflikt hervorruft, in einer der beiden Softwarekomponenten nach deren Entschlüsselung für alle in der Softwarekomponente enthaltenen Funktionsaufrufe und Zugriffe, welche diesen Namen verwenden, durch einen Ersatznamen ersetzt wird.

6. Verfahren nach Anspruch 5,
wobei der Ersatzname in der mitübertragenen Namenskonfliktauflösungsregel enthalten ist oder in der Zielsystemvorrichtung (4) generiert wird.

7. Verfahren nach Anspruch 6,
wobei der Ersatzname durch eine generierte Zufallszahl oder durch einen Zählwert gebildet wird.

8. Verfahren nach Anspruch 1-7,
wobei ein Name für einen Funktionsaufruf, eine Konstante, eine Variable, einen Datentyp oder ein anderes Objekt einer anderen Softwarekomponente eine Folge von Zeichen aufweist, die Buchstaben und Zahlen umfassen.

9. Verfahren nach Anspruch 1-8,
wobei eine entwickelte Softwarekomponente (SWK) unter Verwendung eines hybriden Verschlüsselungsverfahrens mit einem öffentlichen Schlüssel (K_{pub}) verschlüsselt wird.

10. Verfahren nach Anspruch 1-9,
wobei die verschlüsselte Softwarekomponente (ENC-SWK) unter Verwendung eines hybriden Verschlüsselungsverfahrens mit einem privaten Schlüssel (Kₚᵣᵢᵥ) entschlüsselt wird, der in der Zielsystemvorrichtung (4) integriert ist.

11. Verfahren nach Anspruch 1-10,
wobei der öffentliche Schlüssel (K_{pub}) und der private Schlüssel (Kₚᵣᵢᵥ) als Schlüsselpaar durch einen Hersteller der Zielsystemvorrichtung (4) generiert werden.

12. Verfahren nach Anspruch 11,
wobei die Zielsystemvorrichtung (4) durch eine speicherprogrammierbare Steuerung gebildet wird.

13. Verfahren nach Anspruch 1-12,
wobei das Erkennen eines Namenskonfliktes, die Erweiterung einer verschlüsselten Softwarekomponente (ENC-SWK) um eine Namenskonfliktauflösungsregel sowie das Auflösen des Namenskonfliktes automatisch durchgeführt werden.

14. System (1) zur namenskonfliktfreien Integration von Softwarekomponenten, die von Softwarekomponentenherstellern (OEM) stammen, mit:
Softwareentwicklungseinrichtungen (2A, 2B) unterschiedlicher Softwarekomponentenhersteller (OEMA, OEMB), die Softwarekomponenten (SWKA, SWKB) herstellen und mit ihrem jeweiligen kryptographischen Schlüssel (KOEMA, KOEMB) verschlüsseln,
wobei bei Auftreten eines Namenskonfliktes bei der Integration von verschlüsselten Softwarekomponenten (ENC-SWK) mindestens eine der verschlüsselten Softwarekomponenten (ENC-SWKA, ENC-SWKB), bei welcher der Namenskonflikt aufgetreten ist, mit einer Namenskonfliktauflösungsregel erweitert wird, und mit
einem Transportmittel (3) zum Transport der verschlüsselten Softwarekomponenten (ENC-SWK) einschließlich der durch die Namenskonfliktauflösungsregel erweiterten verschlüsselten Softwarekomponente (ENC-SWKA, ENC-SWKB) zu einer Zielsystemvorrichtung (4), welche nach Empfang der transportierten verschlüsselten Softwarekomponenten (ENC-SWKA, ENC-SWKB) diese zunächst entschlüsselt und
anschließend entsprechend der mittransportierten Namenskonfliktauflösungsregel den aufgetretenen Namenskonflikt automatisch auflöst.

15. System nach Anspruch 14,
wobei das Transportmittel (3) ein Datennetz oder einen Datenträger aufweist.

16. Zielsystemvorrichtung (4) zur Auflösung von Namenskonflikten bei Softwarekomponenten, insbesondere für ein System (1) nach Anspruch 14 oder 15, mit:
einer Schnittstelle zum Empfangen von verschlüsselten Softwarekomponenten (ENC-SWK),
wobei, wenn mindestens eine empfangene verschlüsselte Softwarekomponente (ENC-SWK) mit einer Namenskonfliktauflösungsregel erweitert ist, die Zielsystemvorrichtung (4) nach Entschlüsseln der verschlüsselten Softwarekomponenten (ENC-SWKA, ENC-SWKB) den aufgetretenen Namenskonflikt anhand der empfangenen Namenskonfliktauflösungsregel automatisch auflöst.

17. Computerprogramm mit Programmbefehlen zur Durchführung des Verfahrens nach Anspruch 1-13,

18. Datenträger, der das Computerprogramm nach Anspruch 17 speichert.

## Claims

1. Method for resolving a naming conflict in encrypted software components (ENC-SWK), comprising the following steps:
(a) Detecting (S1) a naming conflict in the encrypted software components (ENC-SWK);
(b) Extending (S2) one of the encrypted software components (ENC-SWK) in which a naming conflict is detected to include a naming conflict resolution rule for resolving the naming conflict;
(c) Resolving (S3) the naming conflict after transmission of the encrypted software components (ENC-SWK) to a destination system device (4) and after decryption thereof on the destination system device (4) in accordance with the co-transmitted naming conflict resolution rule.

2. Method according to claim 1,
wherein a naming conflict between encrypted software components (ENC-SWK) is detected if the software components (SWK) have at least one identical name for function calls, constants, variables, data types or other objects of different functions, constants, variables, data types or other objects.

3. Method according to claim 1 or 2,
wherein a naming conflict between encrypted software components (ENC-SWK) is detected using unencrypted header data of the respective encrypted software components (ENC-SWK).

4. Method according to claim 1 or 2,
wherein a naming conflict between encrypted software components (ENC-SWK) is detected using tables of the name used in the encrypted software components (ENC-SWK) for software component calls, constants, variables, data types or objects.

5. Method according to claim 1-4,
wherein to resolve a naming conflict between two encrypted software components (ENC-SWK), the name causing the naming conflict is replaced by a substitute name in one of the two software components after decryption thereof for all the function calls and accesses using that name that are contained in the software component.

6. Method according to claim 5,
wherein the substitute name is contained in the co-transmitted naming conflict resolution rule or is generated in the destination system device (4).

7. Method according to claim 6,
wherein the substitute name is constituted by a generated random number or by a count value.

8. Method according to claim 1-7,
wherein a name for a function call, a constant, a variable, a data type or another object of another software component comprises a sequence of characters that include letters and numbers.

9. Method according to claim 1-8,
wherein a developed software component (SWK) is encrypted using a hybrid cryptographic method using a public key (K_{pub}).

10. Method according to claim 1-9,
wherein the encrypted software component (ENC-SWK) is decrypted using a hybrid cryptographic method using a private key (Kₚᵣᵢᵥ) which is incorporated in the destination system device (4).

11. Method according to claim 1-10,
wherein the public key (K_{pub}) and the private key (Kₚᵣᵢᵥ) are generated as a key pair by a manufacturer of the destination system device (4).

12. Method according to claim 11,
wherein the destination system device (4) is constituted by a programmable logic controller.

13. Method according to claim 1-12,
wherein the detection of a naming conflict, the extension of an encrypted software component (ENC-SWK) to include a naming conflict resolution rule, and the resolution of the naming conflict are carried out automatically.

14. System (1) for naming-conflict-free integration of software components originating from software component manufacturers (OEM), comprising:
software development devices (2A, 2B) of different software component manufacturers (OEMA, OEMB) which manufacture software components (SWKA, SWKB) and encrypt them using their respective cryptographic key (KOEMA, KOEMB),
wherein in the event of a naming conflict during integration of encrypted software components (ENC-SWK) at least one of the encrypted software components (ENC-SWKA, ENC-SWKB) in which the naming conflict has occurred is extended to include a naming conflict resolution rule, and comprising
a transport means (3) for transporting the encrypted software components (ENC-SWK) including the encrypted software component (ENC-SWKA, ENC-SWKB) which has been extended to incorporate the naming conflict resolution rule to a destination system device (4) which, on receipt of the transported encrypted software components (ENC-SWKA, ENC-SWKB), first decrypts them and then automatically resolves the naming conflict that has occurred in accordance with the co-transported naming conflict resolution rule.

15. System according to claim 14,
wherein the transport means (3) comprises a data network or a data medium.

16. Destination system device (4) for resolving naming conflicts in software components, in particular for a system (1) as claimed in claim 14 or 15, comprising:
an interface for receiving encrypted software components (ENC-SWK),
wherein, if at least one received encrypted software component (ENC-SWK) is extended to include a naming conflict resolution rule, the destination system device (4) after decryption of the encrypted software components (ENC-SWKA, ENC-SWKB) automatically resolves the naming conflict that has occurred using the received naming conflict resolution rule.

17. Computer program with program commands for carrying out Method according to claim 1-13,

18. Data medium which stores the computer program as claimed in claim 17.

## Revendications

1. Procédé pour résoudre un conflit de noms au niveau de composants logiciels cryptés (ENC-SWK), comportant les étapes suivantes :
(a) identification (S1) d'un conflit de noms au niveau des composants logiciels cryptés (ENC-SWK) ;
(b) élargissement (S2) de l'un des composants logiciels cryptés (ENC-SWK), au niveau desquels un conflit de noms a été identifié, au moyen d'une règle de résolution de conflits de noms pour résoudre le conflit de noms ;
(c) résolution (S3) du conflit de noms après la transmission des composants logiciels cryptés (ENC-SWK) vers un dispositif de système cible (4) et après leur décryptage sur le dispositif de système cible (4) conformément à la règle de résolution de conflits de noms cotransmise.

2. Procédé selon la revendication 1, un conflit de noms entre des composants logiciels cryptés (ENC-SWK) étant identifié lorsque les composants logiciels (SWK) présentent au moins un nom identique pour des appels de fonctions, des constantes, des variables, des types de données ou d'autres objets de fonctions différentes, de constantes, de variables, de types de données ou d'autres objets.

3. Procédé selon la revendication 1 ou 2, un conflit de noms entre des composants logiciels cryptés (ENC-SWK) étant identifié à l'aide de données d'en-tête non cryptées des composants logiciels cryptés respectifs (ENC-SWK).

4. Procédé selon la revendication 1 ou 2, un conflit de noms entre des composants logiciels cryptés (ENC-SWK) étant identifié à l'aide de tableaux des noms utilisés dans les composants logiciels cryptés (ENC-SWK) pour des appels de composants logiciels, des constantes, des variables, des types de données ou des objets.

5. Procédé selon la revendication 1 à 4, le nom qui provoque le conflit de noms étant, pour résoudre un conflit de noms entre deux composants logiciels cryptés (ENC-SWK), remplacé par un nom de remplacement dans l'un des deux composants logiciels après son décryptage pour tous les appels de fonctions et accès contenus dans le composant logiciel et qui utilisent ce nom.

6. Procédé selon la revendication 5, le nom de remplacement étant contenu dans la règle de résolution de conflits de noms cotransmise ou générée dans le dispositif de système cible (4).

7. Procédé selon la revendication 6, le nom de remplacement étant formé par un nombre aléatoire généré ou par une valeur de comptage.

8. Procédé selon la revendication 1 à 7, un nom d'un appel de fonction, d'une constante, d'une variable, d'un type de données ou d'un autre objet d'un autre composant logiciel présentant une suite de caractères incluant des lettres et des chiffres.

9. Procédé selon la revendication 1 à 8, un composant logiciel développé (SWK) étant crypté avec une clé publique (K_{pub}) moyennant l'utilisation d'un procédé de cryptage hybride.

10. Procédé selon la revendication 1 à 9, le composant logiciel crypté (ENC-SWK) étant décrypté, moyennant l'utilisation d'un procédé de cryptage hybride, avec une clé privée (Kₚᵣᵢᵥ) intégrée au dispositif de système cible (4).

11. Procédé selon la revendication 1 à 10, la clé publique (K_{pub}) et la clé privée (Kₚᵣᵢᵥ) étant générées en tant que paire de clés par un fabricant du dispositif de système cible (4).

12. Procédé selon la revendication 11, le dispositif de système cible (4) étant formé par une commande par programme enregistré.

13. Procédé selon la revendication 1 à 12, l'identification d'un conflit de noms, l'élargissement d'un composant logiciel crypté (ENC-SWK) par une règle de résolution de conflits de noms et la résolution du conflit de noms étant effectués automatiquement.

14. Système (1) pour l'intégration, sans conflit de noms, de composants logiciels provenant de fabricants de composants logiciels (OEM), comportant :
- des dispositifs de développement de logiciels (2A, 2B) de différents fabricants de composants logiciels (OEMA, OEMB) qui fabriquent des composants logiciels (SWKA, SWKB) et les cryptent avec leur clé cryptographique respective (KOEMA, KOEMB),
au moins l'un des composants logiciels cryptés (ENC-SWKA, ENC-SWKB) au niveau duquel le conflit de noms est survenu étant élargi par une règle de résolution de conflits de noms en cas de survenance d'un conflit de noms lors de l'intégration de composants logiciels cryptés (ENC-SWK) et
- un moyen de transport (3) pour transporter les composants logiciels cryptés (ENC-SWK), y compris le composant logiciel crypté (ENC-SWKA, ENC-SWKB) élargi par la règle de résolution de conflits de noms vers un dispositif de système cible (4) qui, après réception des composants logiciels cryptés transportés (ENC-SWKA, ENC-SWKB), décrypte tout d'abord ceux-ci et résout ensuite automatiquement, conformément à la règle de résolution de conflits de noms cotransportée, le conflit de noms survenu.

15. Système selon la revendication 14, le moyen de transport (3) comportant un réseau de données ou un support de données.

16. Dispositif de système cible (4) pour résoudre des conflits de noms au niveau de composants logiciels, en particulier pour un système (1) selon la revendication 14 ou 15, comportant :
- une interface pour la réception de composants logiciels cryptés (ENC-SWK),
le dispositif de système cible (4), lorsqu'au moins un composant logiciel crypté reçu (ENC-SWK) est élargi par un règle de résolution de conflits de noms, résolvant automatiquement, après le décryptage des composants logiciels cryptés (ENC-SWKA, ENC-SWKB), le conflit de noms survenu à l'aide de la règle de résolution de conflits de noms reçue.

17. Programme informatique comportant des ordres de programme pour l'exécution du procédé selon la revendication 1 à 13.

18. Support de données qui enregistre le programme informatique selon la revendication 17.
